# EUROPEAN PATENT APPLICATION

(11) **EP 4 550 374 A1**
(43) Date of publication of application: **07.05.2025**
(21) Application number: 24197632.3
(22) Date of filing: 30.08.2024
(51) Int. Cl.: H01G 4/30, H01G 4/33, H01G 4/005, H01G 4/012, H01G 4/224, H01G 4/12, H01G 4/008

(54) **MULTILAYER ELECTRONIC COMPONENT COMPRISING COVER AND MARGIN ELECTRODES FOR ELECTROMAGNETIC INTERFERENCE SUPPRESSION**

(30) Priority: 01.11.2023 KR 20230149417
(71) Applicant: Samsung Electro-Mechanics Co., Ltd., Gyeonggi-do (KR)
(72) Inventor: Yun, Han Sol, Suwon-si, Gyeonggi-do (KR); Koo, Hanni, Suwon-si, Gyeonggi-do (KR); Kang, Sung Hyung, Suwon-si, Gyeonggi-do (KR); Ahn, Young Ghyu, Suwon-si, Gyeonggi-do (KR)
(74) Representative: Grünecker Patent- und Rechtsanwälte PartG mbB

(57) **Abstract**

A cover electrode may be connected to an adjacent internal electrode and the same external electrode, and the cover electrode, having a width wider than that of the adjacent internal electrode, may be disposed on a cover portion, thereby suppressing occurrence of electromagnetic interference (EMI).

## Description

### CROSS-REFERENCE TO RELATED APPLICATION(S)

This application claims benefit of priority to Korean Patent Application No. 10-2023-0149417 filed on November 1, 2023 in the Korean Intellectual Property Office, the disclosure of which is incorporated herein by reference in its entirety.

### TECHNICAL FIELD

The present disclosure relates to a multilayer electronic component.

### BACKGROUND

A multilayer ceramic capacitor (MLCC), a multilayer electronic component, is a chip-type condenser mounted on printed circuit boards of various types of electronic products such as image display devices, including a liquid crystal display (LCD) and a plasma display panel (PDP), computers, smartphones, and mobile phones, and serves to charge or discharge electricity therein or therefrom.

The multilayer ceramic capacitor may be used as a component of various electronic devices due to having a small size, ensuring high capacitance and being easily mounted. With the miniaturization and high-output power of various electronic devices such as computers and mobile devices, demand for miniaturization and implementation of high capacitance in multilayer ceramic capacitors has also been increasing.

MLCCs may generate electromagnetic interference (EMI) when used in a state of being mounted on a board or the like. When MLCCs emit EMI noise, the noise may cause other nearby electronic devices to have degraded performance or to malfunction. For example, wireless communication devices or sensitive electronic devices may have signals interfered with by high-frequency noise generated by MLCCs, leading to degradation in communication quality or data loss.

Accordingly, there is demand for development of MLCCs in which EMI noise generation is suppressed.

### SUMMARY

An aspect of the present disclosure provides a multilayer electronic component having excellent reliability.

Another aspect of the present disclosure provides a multilayer electronic component in which electromagnetic interference (EMI) is suppressed.

However, the aspects of the present disclosure are not limited to those set forth herein, and will be more easily understood in the course of describing specific example embodiments of the present disclosure.

According to an aspect of the present disclosure, there is provided a multilayer electronic component including a body including a capacitance formation portion including first and second internal electrodes disposed alternately in a first direction with a dielectric layer interposed therebetween, the capacitance formation portion having an uppermost end in the first direction on which the first internal electrode is disposed and a lowermost end in the first direction on which the second internal electrode is disposed, a first cover portion disposed on an upper surface of the capacitance formation portion in the first direction, the first cover portion including a first cover electrode, and a second cover portion disposed on a lower surface of the capacitance formation portion in the first direction, the second cover portion including a second cover electrode, the body having first and second surfaces opposing each other in the first direction, third and fourth surfaces connected to the first and second surfaces, the third and fourth surfaces opposing each other in a second direction, and fifth and sixth surfaces connected to the first to fourth surfaces, the fifth and sixth surfaces opposing each other in a third direction, a first external electrode disposed on the third surface, the first external electrode connected to the first internal electrode and the first cover electrode, and a second external electrode disposed on the fourth surface, the second external electrode connected to the second internal electrode and the second cover electrode. When average sizes of the first internal electrode, the second internal electrode, the first cover electrode, and the second cover electrode in the third direction are Wi1, Wi2, Wc1, and Wc2, respectively, Wc1-Wi1 > 80 um and Wc2-Wi2 > 80 um are satisfied.

According to example embodiments of the present disclosure, a cover electrode may be connected to an adjacent internal electrode and the same external electrode, and the cover electrode, having a width wider than that of the adjacent internal electrode, may be disposed on a cover portion, thereby suppressing occurrence of EMI.

However, the various and beneficial advantages and effects of the present disclosure are not restricted to those set forth herein, and will be more easily understood in the process of describing specific example embodiments.

### BRIEF DESCRIPTION OF DRAWINGS

The above and other aspects, features, and advantages of the present disclosure will be more clearly understood from the following detailed darescription, taken in conjunction with the accompanying drawings, in which:
FIG. 1 illustrates a schematic perspective view of a multilayer electronic component according to an example embodiment of the present disclosure;
FIG. 2 illustrates a schematic cross-sectional view taken along line I-I' of FIG. 1;
FIG. 3 illustrates a schematic cross-sectional view taken along line II-II' of FIG. 1;
FIG. 4 sequentially illustrates plan views of a first cover electrode, a first internal electrode, a second internal electrode, and a second cover electrode included in the multilayer electronic component of FIG. 1;
FIG. 5 is a diagram of a multilayer electronic component according to a modification of the present disclosure, corresponding to FIG. 2;
FIG. 6 is a diagram of a multilayer electronic component according to a modification of the present disclosure, corresponding to FIG. 3;
FIG. 7 is a diagram of a multilayer electronic component according to another modification of the present disclosure, corresponding to FIG. 2;
FIG. 8 is a diagram of a multilayer electronic component according to another modification of the present disclosure, corresponding to FIG. 3; and
FIG. 9 sequentially illustrates plan views of a first cover electrode, a first internal electrode, first and second margin electrodes, a second internal electrode, first and second margin electrodes, and a second cover electrode included in a multilayer electronic component according to another modification of the present disclosure.
Fig. 10 is magnetic field strengths according to frequency change.

### DETAILED DESCRIPTION

Hereinafter, example embodiments of the present disclosure are described with reference to the accompanying drawings. The present disclosure may, however, be exemplified in many different forms and should not be construed as being limited to the specific example embodiments set forth herein. In addition, example embodiments of the present disclosure may be provided for a more complete description of the present disclosure to those skilled in the art. Accordingly, the shapes and sizes of the elements in the drawings may be exaggerated for clarity of description, and elements denoted by the same reference numerals in the drawings may be the same elements.

In order to clearly illustrate the present disclosure, portions not related to the description are omitted, and sizes and thicknesses are magnified in order to clearly represent layers and regions, and similar portions having the same functions within the same scope are denoted by similar reference numerals throughout the specification. Throughout the specification, when an element is referred to as "comprising" or "including," it means that it may include other elements as well, rather than excluding other elements, unless specifically stated otherwise.

In the drawings, a first direction may be defined as a lamination direction or a thickness (T) direction, a second direction may be defined as a length (L) direction, and a third direction may be defined as a width (W) direction.

### Multilayer Electronic Component

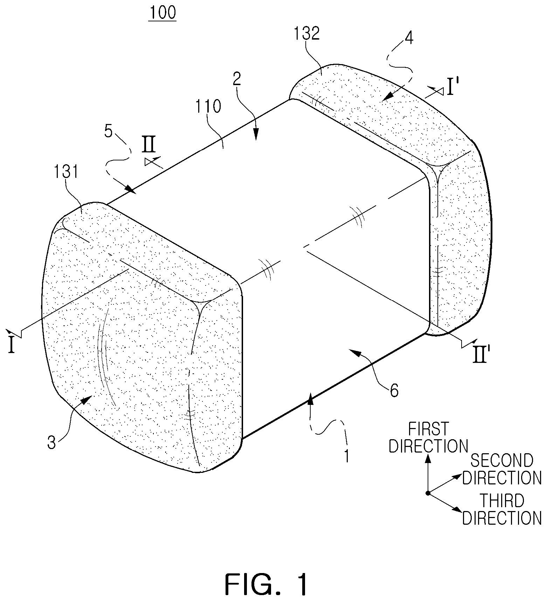

FIG. 1 illustrates a schematic perspective view of a multilayer electronic component according to an example embodiment of the present disclosure.

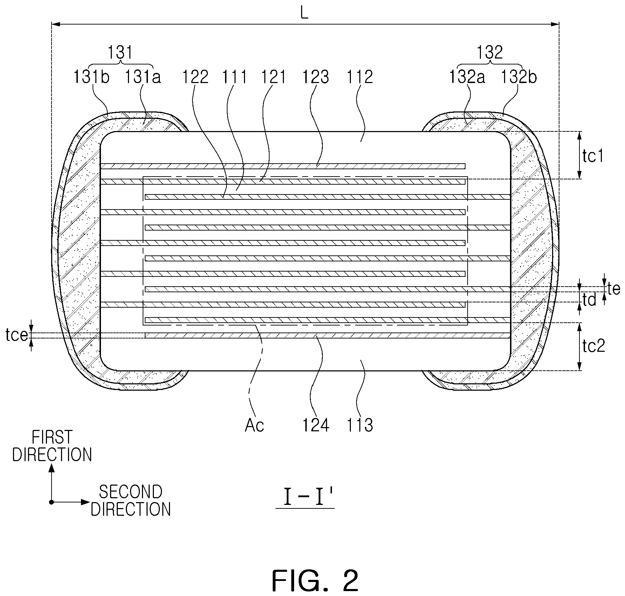

FIG. 2 illustrates a schematic cross-sectional view taken along line I-I' of FIG. 1.

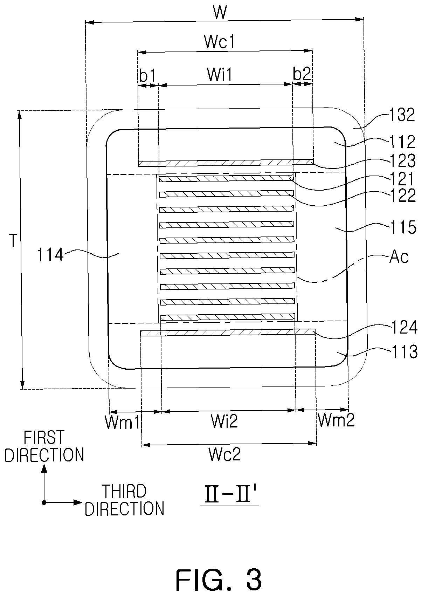

FIG. 3 illustrates a schematic cross-sectional view taken along line II-II' of FIG. 1.

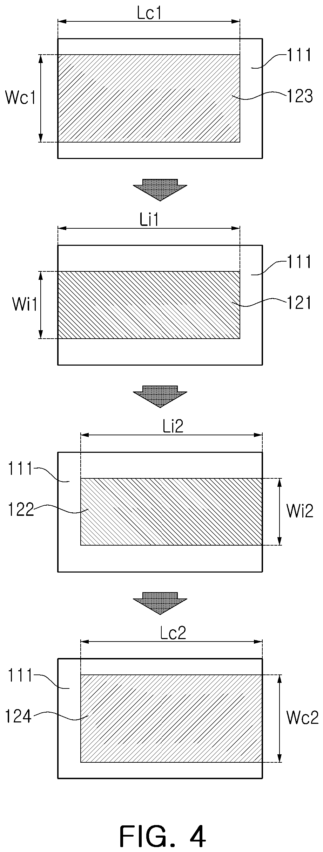

FIG. 4 sequentially illustrates plan views of a first cover electrode, a first internal electrode, a second internal electrode, and a second cover electrode included in the multilayer electronic component of FIG. 1.

Hereinafter, a multilayer electronic component 100 according to an example embodiment of the present disclosure will be described in detail with reference to FIGS. 1 to 4. In addition, a multilayer ceramic capacitor (hereinafter referred to as "MLCC") is described as an example of a multilayer electronic component, but the present disclosure is not limited thereto.

The multilayer electronic component 100 according to an example embodiment of the present disclosure may include a body including a capacitance formation portion Ac including first and second internal electrodes 121 and 122 disposed alternately in a first direction with a dielectric layer 111 interposed therebetween, the capacitance formation portion Ac having an uppermost end in the first direction on which the first internal electrode 121 and a lowermost end in the first direction on which the second internal electrode 122 is disposed, a first cover portion 112 disposed on an upper surface of the capacitance formation portion Ac in the first direction, the first cover portion 112 including a first cover electrode 123, and a second cover portion 113 disposed on a lower surface of the capacitance formation portion Ac in the first direction, the second cover portion 113 including a second cover electrode 124, the body having first and second surfaces 1 and 2 opposing each other in the first direction, third and fourth surfaces 3 and 4 connected to the first and second surfaces 1 and 2, the third and fourth surfaces 3 and 4 opposing each other in a second direction, and fifth and sixth surfaces 5 and 6 connected to the first to fourth surfaces 1, 2, 3, and 4, the fifth and sixth surfaces 5 and 6 opposing each other in a third direction, a first external electrode 131 disposed on the third surface 3, the first external electrode 131 connected to the first internal electrode 121 and the first cover electrode 123, and a second external electrode 132 disposed on the fourth surface 4, the second external electrode 132 connected to the second internal electrode 122 and the second cover electrode 124. When average sizes of the first internal electrode 121, the second internal electrode 122, the first cover electrode 123, and the second cover electrode 124 in the third direction are Wi1, Wi2, Wc1, and Wc2, respectively, Wc1-Wi1 > 80 µm and Wc2-Wi2 > 80 um may be satisfied.

MLCCs may generate electromagnetic interference (EMI) when used in a state of being mounted on a board or the like. When MLCCs emit EMI noise, the noise may cause other nearby electronic devices to have degraded performance or to malfunction. For example, wireless communication devices or sensitive electronic devices may have signals interfered with by high-frequency noise generated by MLCCs, leading to degradation in communication quality or data loss.

According to an example embodiment of the present disclosure, the cover electrodes 123 and 124 may be connected to an adjacent internal electrode and the same external electrode, and the cover electrodes 123 and 124 having a width wider than that of the adjacent internal electrode may be disposed on the cover portions 112 and 113, thereby suppressing occurrence of EMI. Current may flow through the first and second internal electrodes 121 and 122 alternately disposed in the capacitance formation portion Ac. Conversely, almost no current may flow through the cover electrodes 123 and 124 connected to the adjacent internal electrode and the same external electrode, such that the cover electrodes 123 and 124 may have a shielding effect. The cover electrodes 123 and 124 may shield a magnetic field radiated from both ends of each of the internal electrodes 121 and 122 in a width direction, thereby suppressing electromagnetic waves generated in a near field of a multilayer electronic component.

Hereinafter, respective components included in the multilayer electronic component 100 according to an example embodiment of the present disclosure will be described.

In the body 110, the dielectric layer 111 and the internal electrodes 121 and 122 may be alternately laminated.

A specific shape of the body 110 is not limited. However, as illustrated, the body 110 may have a hexahedral shape or a shape similar thereto. During a sintering process, ceramic powder particles included in the body 110 may shrink, such that the body 110 may not have a hexahedral shape having perfectly straight lines, but may have a substantially hexahedral shape.

The body 110 may have first and second surfaces 1 and 2 opposing each other in a first direction, third and fourth surfaces 3 and 4 connected to the first and second surfaces 1 and 2, the third and fourth surfaces 3 and 4 opposing each other in a second direction, and fifth and sixth surfaces 5 and 6 connected to the first to fourth surfaces 1, 2, 3, and 4, the fifth and sixth surfaces 5 and 6 opposing each other in a third direction.

As margin regions in which the internal electrodes 121 and 122 are not disposed on the dielectric layer 111 overlap each other, a step portion may be caused by thicknesses of the internal electrodes 121 and 122, such that a corner, connecting a first surface and third to fifth surfaces to each other, and/or a corner, connecting a second surface and the third to fifth surfaces to each other, may shrink toward a central portion of the body 110 in the first direction, based on the first surface or the second surface. Alternatively, due to a shrinkage behavior of the body during a sintering process, a corner, connecting the first surface 1 and the third to sixth surfaces 3, 4, 5, and 6 to each other, and/or a corner, connecting the second surface 2 and the third to sixth surfaces 3, 4, 5, and 6 to each other, may shrink toward the central portion of the body 110 in the first direction, based on the first surface or the second surface. Alternatively, in order to prevent chipping defects, an additional process may be performed to round corners connecting respective surfaces of the body 110 to each other. Accordingly, a corner, connecting a first surface and third to sixth surfaces to each other, and/or a corner, connecting a second surface and the third to sixth surfaces to each other, may have a rounded shape.

A plurality of dielectric layers 111, included in the body 110, may be in a sintered state, and adjacent dielectric layers 111 may be integrated with each other such that boundaries therebetween may not be readily apparent without using a scanning electron microscope (SEM). The number of dielectric layers laminated is not particularly limited, and may be determined in consideration of a size of the multilayer electronic component. For example, the body may be formed by laminating 400 or more dielectric layers on each other.

The dielectric layer 111 may be formed by preparing a ceramic slurry including ceramic powder particles, an organic solvent and a binder, applying the slurry on a carrier film and drying the same to prepare a ceramic green sheet, and then sintering the ceramic green sheet. The ceramic powder particles are not limited as long as sufficient capacitance is obtainable therewith, and may be, for example, barium titanate-based (BaTiO₃)-based powder particles. For a more specific example, the ceramic powder particles may be barium titanate-based (BaTiO₃)-based powder particles, CaZrO₃-based paraelectric powder particles, or the like. For a more specific example, the barium titanate-based (BaTiO₃)-based powder particles may be at least one of BaTiO₃, (Ba₁₋ₓCaₓ)TiO₃ (0<x<1), Ba(Ti_{1-y}Ca_{y})O3 (0<y<1), (Ba₁₋ₓCaₓ)(Ti_{1-y}Zr_{y})O₃ (0<x<1, 0<y<1), and Ba(Ti_{1-y}Zr_{y})O₃ (0<y<1), and the CaZrO₃-based paraelectric powder particles may be (Ca₁₋ₓSrₓ)(Zr_{1-y}Ti_{y})O₃ (0<x<1, 0<y<1) .

Accordingly, the dielectric layer 111 may include at least one of BaTiO₃, (Ba₁₋ₓCaₓ)TiO₃ (0<x<1), Ba(Ti_{1-y}Ca_{y})O3 (0<y<1), (Ba₁₋ₓCaₓ)(Ti_{1-y}Zr_{y})O₃ (0<x<1, 0<y<1), Ba(Ti_{1-y}Zr_{y})O₃ (0<y<1), and (Ca₁₋ₓSrₓ)(Zr_{1-y}Ti_{y})O₃ (0<x<1, 0<y<1).

The body 110 may include a capacitance formation portion Ac disposed in the body 110, the capacitance formation portion Ac having capacitance by including the first internal electrode 121 and the second internal electrode 122 disposed to oppose each other with the dielectric layer 111 interposed therebetween, and cover portions 112 and 113 disposed on upper and lower portions of the capacitance formation portion Ac in the first direction.

The capacitance formation portion Ac may be a portion contributing to forming capacitance of a capacitor, and may be formed by repeatedly laminating a plurality of first and second internal electrodes 121 and 122 on each other with the dielectric layer 111 interposed therebetween. In addition, the capacitance formation portion Ac may have an uppermost end in the first direction on which the first internal electrode 121 is disposed, and a lowermost end in the first direction on which the second internal electrode 122 is disposed.

The internal electrodes 121 and 122 may include the first internal electrode 121 and the second internal electrode 122. The first and second internal electrodes 121 and 122 may be alternately disposed to oppose each other with the dielectric layer 111, included in the body 110, interposed therebetween, and may respectively be exposed to the third and fourth surfaces 3 and 4 of the body 110.

The first internal electrode 121 may be spaced apart from the fourth surface 4 and exposed through the third surface 3, and the second internal electrode 122 may be spaced apart from the third surface 3 and exposed through the fourth surface 4. The first external electrode 131 may be disposed on the third surface 3 of the body to be connected to the first internal electrode 121, and the second external electrode 132 may be disposed on the fourth surface 4 of the body to be connected to the second internal electrode 122.

That is, the first internal electrode 121 may not be connected to the second external electrode 132 and may be connected to the first external electrode 131, and the second internal electrode 122 may not be connected to the first external electrode 131 and may be connected to the second external electrode 132. Accordingly, the first internal electrode 121 may be spaced apart from the fourth surface 4 by a predetermined distance, and the second internal electrode 122 may be spaced apart from the third surface 3 by a predetermined distance. In addition, the first and second internal electrodes 121 and 122 may be disposed to be spaced apart from the fifth and sixth surfaces 5 and 6 of the body 110.

A conductive metal, included in the internal electrodes 121 and 122, may be at least one of Ni, Cu, Pd, Ag, Au, Pt, In, Sn, Al, Ti, and alloys thereof, but the present disclosure is not limited thereto.

The cover portions 112 and 113 may include a first cover portion 112 disposed on an upper surface of the capacitance formation portion Ac in the first direction, the first cover portion 112 including a first cover electrode 123, and a second cover portion 113 disposed on a lower surface of the capacitance formation portion Ac in the first direction, the second cover portion 113 including a second cover electrode 124.

The cover portions 112 and 113 may basically serve to prevent an internal electrode from being damaged due to physical or chemical stress.

The cover portions 112 and 113 may include the cover electrodes 123 and 124, and may include a material the same as that of the dielectric layer 111. That is, the cover portions 112 and 113 may include a ceramic material, and may include, for example, a barium titanate (BaTiO₃)-based ceramic material.

The cover electrodes 123 and 124 may include a conductive metal, and the conductive metal, included in the cover electrodes 123 and 124, may be at least one of Ni, Cu, Pd, Ag, Au, Pt, In, Sn, Al, Ti, and alloys thereof, but the present disclosure is not limited thereto. In addition, the conductive metal, included in the cover electrodes 123 and 124, may be the same as the conductive metal, included in the internal electrodes 121 and 122, but the present disclosure is not limited thereto.

An average thickness (td) of the dielectric layer 111, an average thickness (te) of each of the internal electrodes 121 and 122, and an average thickness (tce) of each of the cover electrodes 123 and 124 are limited. The average thickness (td) of the dielectric layer 111 may be, for example, 0.1 um to 100 um. The average thickness (te) of each of the internal electrodes 121 and 122 may be, for example, 0.05 um to 3.0 um. The average thickness (tce) of each of the cover electrodes 123 and 124 may be 0.05 um to 3.0 µm.

In addition, the average thickness (td) of the dielectric layer 111 and the average thickness (te) of each of the internal electrodes 121 and 122 may be arbitrarily set depending on desired properties or usage. For example, in order to achieve miniaturization and high capacitance, in the case of a high-voltage electronic component, the average thickness (td) of the dielectric layer 111 may be less than 2.8 um, and the average thickness (te) of each of the internal electrodes 121 and 122 may be less than 1 um. In addition, in order to achieve miniaturization and high capacitance, in the case of a small IT electronic component, the average thickness (td) of the dielectric layer 111 may be 0.4 µm or less, and the average thickness (te) of each of the internal electrodes 121 and 122 may be 0.4 um or less.

The average thickness (td) of the dielectric layer 111 and the average thickness (te) of each of the internal electrodes 121 and 122 may respectively refer to a size of the dielectric layer 111 in the first direction, and a size of each of the internal electrodes 121 and 122 in the first direction. The average thickness (td) of the dielectric layer 111 and the average size (te) of each of the internal electrodes 121 and 122 may be measured, for example, by scanning, with an SEM, a cross-section of the body 110 in the first and second directions at a magnification of 10,000. More specifically, the average thickness (td) of the dielectric layer 111 may be measured by measuring thicknesses of one dielectric layer 111 at multiple points of the dielectric layer 111, for example, thirty points equally spaced apart from each other in the second direction, and calculating an average value of the thicknesses. In addition, the average thickness (te) of each of the internal electrodes 121 and 122 may be measured by measuring thicknesses of each of the internal electrodes 121 and 122 at multiple points of each of the internal electrodes 121 and 122, for example, thirty points equally spaced apart from each other in the second direction, and calculating an average value of the thicknesses. The thirty points, equally spaced apart from each other, may be designated in the capacitance formation portion Ac. In addition, when such average value measurement is performed on ten dielectric layers 111 and ten internal electrodes 121 and 122, the average thickness (td) of the dielectric layer 111 and the average thickness (te) of each of the internal electrodes 121 and 122 may be further generalized. In addition, the average thickness (tce) of each of the cover electrodes 123 and 124 may be measured in the same manner as the average thickness (td) of the dielectric layer 111 and the average thickness (te) of each of the internal electrodes 121 and 122.

When average sizes of the first internal electrode 121, the second internal electrode 122, the first cover electrode 123, and the second cover electrode 124 in the third direction are Wi1, Wi2, Wc1, and Wc2, respectively, Wc1-Wi1 > 80 um and Wc2-Wi2 > 80 um may be satisfied, thereby exhibiting a significant EMI suppression effect. When Wc1-Wi1 is 80 um or less or Wc2-Wi2 is 80 um or less, an effect of suppressing EMI, caused by a cover electrode, may be insufficient. More preferably, Wc1-Wi1 ≥ 90 um and Wc2-Wi2 ≥ 90 um may be satisfied, and even more preferably, Wc1-Wi1 ≥ 160 µm and Wc2-Wi2 ≥ 160 µm may be satisfied.

Here, the average sizes of the first internal electrode, the second internal electrode, the first cover electrode, and the second cover electrode in the third direction may respectively refer to average widths of the first internal electrode, the second internal electrode, the first cover electrode, and the second cover electrode.

Wi1, Wi2, Wc1, and Wc2 may be measured while the body 100 is polished in the first direction. Specifically, after the body 100 is polished until the first cover electrode 123 is exposed, widths (sizes in the third direction) of the first cover electrode 123 may be measured at five points equally spaced apart from each other in the second direction, and an average value of the widths may be Wc1. Wi1, Wi2, and Wc2 may also be measured in the same manner.

In an example embodiment, in the first direction, an entire portion of the first internal electrode 121 may overlap the first cover electrode 123, and an entire portion of the second internal electrode 122 may overlap the second cover electrode 124.

In this case, in the first direction, the first cover electrode 123 may be disposed to partially overlap the first internal electrode 121, and the second cover electrode 124 may be disposed to partially overlap the second internal electrode 122.

In addition, a central portion of the first internal electrode 121 in the third direction may be laminated to substantially correspond to a central portion of the first cover electrode 123 in the third direction, and a central portion of the second internal electrode 122 in the third direction may be laminated to substantially correspond to a central portion of the second cover electrode 124 in the third direction. That is, referring to FIG. 3, b1 and b2, sizes in the third direction of a region of the first cover electrode 123 in either side thereof, not overlapping the first internal electrode 121, may be greater than zero and disposed to be substantially equal to each other.

In one or more aspects, the terms "about," "substantially," and "approximately" may provide an industry-accepted tolerance for their corresponding terms and/or relativity between items, such as a tolerance of from less than one percent to 10 percent of the actual value stated, and other suitable tolerances.

Accordingly, an effect of suppressing EMI generation may be maximized by the cover electrodes 123 and 124.

In an example embodiment, when average sizes of the first internal electrode 121, the second internal electrode 122, the first cover electrode 123, and the second cover electrode 124 in the second direction are Li1, Li2, Lc1, and Lc2, respectively, Li1 ≤ Lc1 and Li2 ≤ Lc2 may be satisfied. In the case of Li1 > Lc1 or Li2 > Lc2, the effect of suppressing EMI generation may be insufficient.

Here, the average sizes of the first internal electrode, the second internal electrode, the first cover electrode, and the second cover electrode in the second direction may respectively refer to average lengths of the first internal electrode, the second internal electrode, the first cover electrode, and the second cover electrode.

Li1, Li2, Lc1, and Lc2 may also be measured in the same manner as Wi1, Wi2, Wc1, and Wc2 described above. Specifically, after the body 100 is polished until the first cover electrode 123 is exposed, lengths (sizes in the second direction) of the first cover electrode 123 may be measured at five points equally spaced apart from each other in the third direction, and an average value of the lengths may be Lc1. Li1, Li2, and Lc2 may also be measured in the same manner.

A thickness of each of the cover portions 112 and 113 is limited. For example, thicknesses tc1 and tc2 of the cover portions 112 and 113 may be 100 to 700 um, respectively.

The average thickness tc1 and tc2 of the cover portions 112 and 113 may refer to sizes in the first direction, and may be values obtained by averaging sizes of the cover portions 112 and 113 in the first direction, measured at five equally spaced points of an upper portion or lower portion of the capacitance formation portion Ac.

In addition, the margin portions 114 and 115 may be disposed on side surfaces of the capacitance formation portion Ac, respectively.

The margin portions 114 and 115 may include a first margin portion 114 disposed on the fifth surface 5 of the body 110 and a second margin portion 115 disposed on the sixth surface 6 of the body 110. That is, the margin portions 114 and 115 may be disposed on end surfaces of the ceramic body 110 in the third direction, respectively.

As illustrated in FIG. 3, the margin portions 114 and 115 may refer to a region between both ends of the first and second internal electrodes 121 and 122 and a boundary surface of the body 110, with respect to a cross-section of the body 110 cut in a width-thickness (W-T) direction.

The margin portions 114 and 115 may basically serve to prevent an internal electrode from being damaged due to physical or chemical stress.

The margin portions 114 and 115 may be formed by forming an internal electrode by applying a conductive paste on a ceramic green sheet, except for a portion of the ceramic green sheet on which a margin portion is to be formed.

A width of each of the margin portions 114 and 115 is not limited. For example, average widths of the margin portions 114 and 115 may be 200 um to 800 um, respectively.

The average width of each of the margin portions 114 and 115 may be an average size Wm2 of a region in which an internal electrode is spaced apart from the fifth surface in the third direction or an average size of a region in which an internal electrode is spaced apart from the sixth surface in the third direction, and may have an average value of sizes of each of the margin portions 114 and 115 in the third direction, measured at five equally spaced points of a side surface of the capacitance formation portion Ac.

Accordingly, in an example embodiment, average sizes Wm1 and Wm2 of regions in which the internal electrodes 121 and 122 is spaced apart from the fifth and sixth surfaces in the third direction may be 200 um to 800 um, respectively.

The external electrodes 131 and 132 may be disposed on the third and fourth surfaces 3 and 4 of the body 110, respectively.

The external electrodes 131 and 132 may be disposed on the third and fourth surfaces 3 and 4 of the body 110, respectively, and may include first and second external electrodes 131 and 132 respectively connected to the first and second internal electrodes 121 and 122.

Referring to FIG. 1, the external electrodes 131 and 132 may be disposed to cover both end surfaces of the side margin portions 114 and 115 in the second direction.

In the present example embodiment, a structure in which the multilayer electronic component 100 has two external electrodes 131 and 132 is described, but the number and shape of the external electrodes 131 and 132 may be changed depending on a shape of the internal electrodes 121 and 122 or other purposes.

The external electrodes 131 and 132 may be formed of any material having electrical conductivity, such as metal or the like, and a specific material may be determined in consideration of electrical properties, structural stability, and the like. Furthermore, the external electrodes 131 and 132 may have a multilayer structure.

For example, the external electrodes 131 and 132 may include electrode layers 131a and 132a disposed on the body 110, and plating layers 131b and 132b formed on the electrode layers 131a and 132a.

For a more specific example of the electrode layers 131a and 132a, the electrode layers 131a and 132a may be sintered electrodes including a conductive metal and glass, or resin-based electrodes including a conductive metal and a resin.

In addition, the electrode layers 131a and 132a may have a form in which a sintered electrode and a resin-based electrode are sequentially formed on a body. In addition, the electrode layers 131a and 132a may be formed by transferring a sheet including a conductive metal onto the body or by transferring a sheet including a conductive metal onto the sintered electrode.

A material having excellent electrical conductivity may be used as the conductive metal included in the electrode layers 131a and 132a, but the material is not limited. For example, the conductive metal may be at least one of nickel (Ni), copper (Cu), and an alloy thereof.

The plating layers 131b and 132b may serve to improve mounting properties. A type of the plating layers 131b and 132b is not limited, and may be a single plating layer including at least one of Ni, Sn, Pd, and alloys thereof, and may be a plurality of plating layers including at least one of Ni, Sn, Pd, and alloys thereof.

For more specific example, the plating layers 131c and 132c may be Ni plating layers or Sn plating layers, and may have a form in which a Ni plating layer and a Sn plating layer are sequentially formed on the electrode layers 131a, 132a, 131b, and 132b, and may have a form in which a Sn plating layer, a Ni plating layer and a Sn plating layer are sequentially formed on the electrode layers 131a, 132a, 131b, and 132b. In addition, the plating layers 131c and 132c may include a plurality of Ni plating layers and/or a plurality of Sn plating layers.

A size of the multilayer electronic component 100 is not limited. For example, a length (L) of the multilayer electronic component 100 may be 1.9 mm to 6.1 mm, a thickness (T) of the multilayer electronic component 100 may be 0.4 mm to 3.5 mm, and a width (W) of the multilayer electronic component 100 may be 1.15 mm to 5.40 mm.

Here, the length (L) of the multilayer electronic component 100 may refer to a maximum size of the multilayer electronic component 100 in the second direction, the thickness (T) of the multilayer electronic component 100 may refer to a maximum size of the multilayer electronic component 100 in the first direction, and the width (W) of the multilayer electronic component 100 may refer to a maximum size of the multilayer electronic component 100 in the third direction.

Hereinafter, a multilayer electronic component 100' according to a modification of the present disclosure, and a multilayer electronic component 100'' according to another modification of the present disclosure will be described, and a repeated description will be omitted.

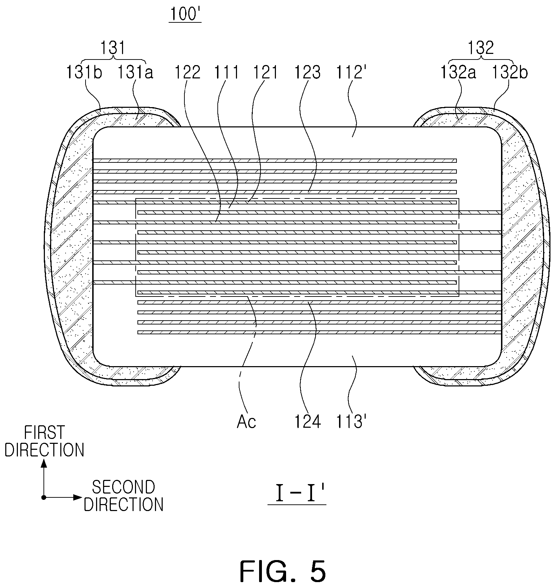

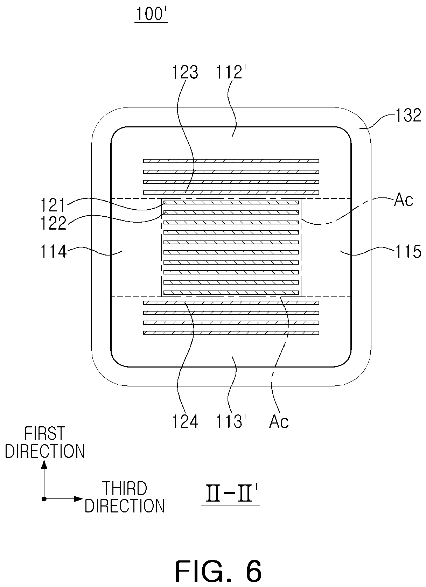

FIG. 5 is a diagram of a multilayer electronic component according to a modification of the present disclosure, corresponding to FIG. 2. FIG. 6 is a diagram of a multilayer electronic component according to a modification of the present disclosure, corresponding to FIG. 3.

Referring to FIGS. 5 and 6 illustrating a multilayer electronic component 100' according to a modification of the present disclosure, in an example embodiment, a first cover portion 112' may include a plurality of first cover electrodes 123, and a second cover portion 113' may include a plurality of second cover electrodes 124. Accordingly, an EMI suppression effect may be further improved.

In this case, the plurality of first cover electrodes 123 may be disposed alternately with a dielectric layer in a first direction, and the plurality of second cover electrodes 124 may be disposed alternately with the dielectric layer in the first direction.

When the cover portions 112' and 113' include a plurality of cover electrodes 123 and 124, the number of cover electrodes 123 and 124 is not limited. As the number of cover electrodes 123 and 124 increases, the EMI suppression effect may be improved. For example, a first cover portion 112' may include two to six first cover electrodes 123, and the second cover portion 113' may include two to six second cover electrodes 124.

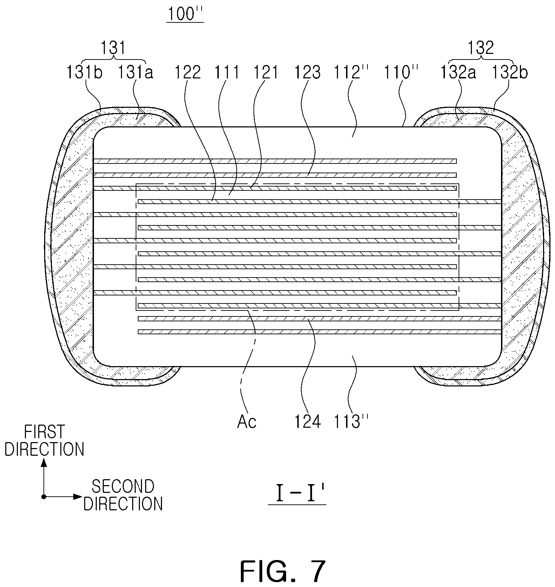

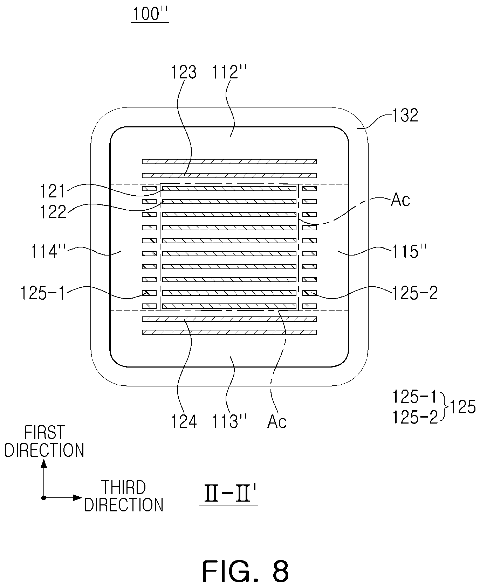

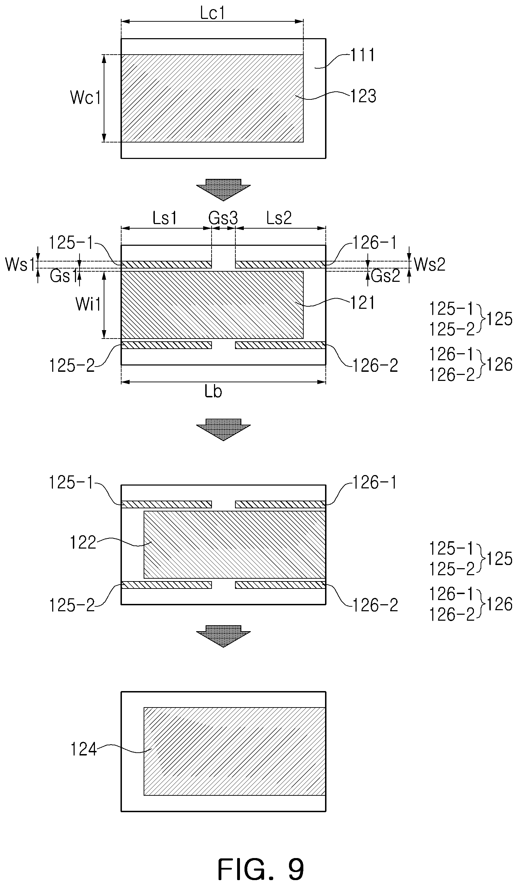

FIG. 7 is a diagram of a multilayer electronic component according to another modification of the present disclosure, corresponding to FIG. 2. FIG. 8 is a diagram of a multilayer electronic component according to another modification of the present disclosure, corresponding to FIG. 3. FIG. 9 sequentially illustrates plan views of a first cover electrode, a first internal electrode, first and second margin electrodes, a second internal electrode, first and second margin electrodes, and a second cover electrode included in a multilayer electronic component according to another modification of the present disclosure. FIG. 8 illustrates a cross-sectional view taken in first and third directions from a position of a body in a second direction, close to a first external electrode.

Referring to FIGS. 7 to 9 illustrating a multilayer electronic component 100'' according to another modification of the present disclosure, a body 110'' may include margin portions 114'' and 115'' disposed on both surfaces of a capacitance formation portion Ac in a third direction, and the margin portions 114'' and 115'' may include a first margin electrode 125 connected to the first external electrode 131, and a second margin electrode 126 spaced apart from the first margin electrode 125, the second margin electrode 126 connected to the second external electrode 132.

As the margin portions 114'' and 115'' include the first and second margin electrodes 125 and 126, an EMI suppression effect may be further improved.

The margin portions 114" and 115'' may include a first margin portion 114" and a second margin portion 115" respectively disposed on one surface and the other surface of the capacitance formation portion Ac in the third direction.

The first margin portion 114'' may include a first-first margin electrode 125-1 connected to the first external electrode, and a second margin electrode 126-1 spaced apart from the first-first margin electrode, the second margin electrode 126-1 connected to the second external electrode.

The second margin portion 115" may include a first-second margin electrode 125-2 connected to the first external electrode, and a second-second margin electrode 126-2 spaced apart from the first-second margin electrode, the second-second margin electrode 126-2 connected to the second external electrode.

In one embodiment, an entire size including an average size of the first-first margin electrode 125-1 in the third direction, the average size (Wi1) of the first internal electrode 121 in the third direction, an average size of the first-second margin electrode 125-2 in the third direction, an average size of a space between the first-first margin electrode 125-1 and the first internal electrode 121 in the third direction, and an average size of a space between the first-second margin electrode 125-2 and the first internal electrode 121 in the third direction may be substantially equal to the average size (Wc1) in the third direction of the first cover electrode 123.

As illustrated in FIG. 9, in an example embodiment, the first and second margin electrodes 125 and 126 may be disposed to be substantially coplanar with the first internal electrode 121 or the second internal electrode 122, but the present disclosure is not limited thereto, and the margin electrodes 125 and 126 may be printed on a dielectric sheet separate from the first internal electrode 121 and the second internal electrode 122, and may be disposed on a different plane from the first internal electrode and the second internal electrode.

The margin electrodes 125 and 126 may include a conductive metal, and the conductive metal, included in the margin electrodes 125 and 126, may be at least one of Ni, Cu, Pd, Ag, Au, Pt, In, Sn, Al, Ti, and alloys thereof, but the present disclosure is not limited thereto. In addition, the conductive metal, included in the margin electrodes 125 and 126, may be the same as a conductive metal, included in the cover electrodes 123 and 124 and/or the internal electrodes 121 and 122, but the present disclosure is not limited thereto.

Hereinafter, a case in which the first and second margin electrodes 125 and 126 are disposed to be substantially coplanar with the first internal electrode 121 will be mainly described. However, a case in which the first and second margin electrodes 125 and 126 are disposed to be substantially coplanar with the second internal electrode 122 may also be applied in a similar manner.

In an example embodiment, when an average size of the first internal electrode 121 in the third direction is Wi1, an average size of the first margin electrode 125 in the third direction is Ws1, and an average size of a space between the first margin electrode 125 and the first internal electrode 121 in the third direction is Gs1, 0.01 ≤ Ws1/Wi1 ≤ 0.50 and 1 um ≤ Gs1 may be satisfied. When Ws1/Wi1 is less than 0.01, the EMI suppression effect may be insufficient. When Ws1/Wi1 is greater than 0.50, a capacitance per unit volume may be reduced. In addition, when Gs1 is less than 1 µm, a distance between a margin electrode and an internal electrode may be excessively narrow, such that current may be likely to directly flow between the margin electrode and the internal electrode.

In addition, the average size of the first internal electrode 121 in the third direction is Wi1, an average size of the second margin electrode 126 in the third direction is Ws2, and an average size of a space between the second margin electrode 125 and the first internal electrode 121 in the third direction is Gs2, 0.01 ≤ Ws2/Wi1 ≤ 0.50 and 1 um ≤ Gs2 may be satisfied.

In an example embodiment, an average size of the body 110'' in the second direction is Lb, an average size of the first margin electrode 125 in the second direction is Ls1, and an average size of the second margin electrode 126 in the second direction is Ls2, 0.01 ≤ Ls1/Lb ≤ 0.50 and 0.01 ≤ Ls2/Lb ≤ 0.50 may be satisfied. When Ls1/Lb is less than 0.01, the EMI suppression effect may be insufficient. When Ls1/Lb is greater than 0.50, it may be difficult to maintain a distance from the second margin electrode 126. When Ls2/Lb is less than 0.01, the EMI suppression effect may be insufficient. When Ls2/Lb is greater than 0.50, it may be difficult to maintain a distance from the first margin electrode 125.

In addition, when an average size of a space between the first margin electrode 125 and the second margin electrode 126 in the second direction is Gs3, 1 um ≤ Gs3 may be satisfied. When Gs3 is less than 1 µm, a distance between the first margin electrode and the second margin electrode may be excessively narrow, such that current may be likely to directly flow between the first margin electrode and the second margin electrode.

Wi1, Ws1, Gs1, Ws2, Gs2, Ls1, Ls2, and Gs3 may be measured after the body 100 is polished until the first internal electrode 121 is exposed. Wi1, Ws1, Gs1, Ws2, and Gs2 may be an average value of sizes (widths) in the third direction, measured at five equally spaced points in the second direction, and Ls1, Ls2, and Gs3 may be an average value of sizes (lengths) in the second direction, measured at five equally spaced points in the third direction.

In an example embodiment, in the first direction, an entire portion of the first margin electrode 125 may overlap the first cover electrode 123, and an entire portion of the second margin electrode 126 may overlap the second cover electrode 124.

In FIGS. 7 and 8, it is illustrated that the first cover portion 112" includes two first cover electrodes 123, and the second cover portion 113 includes two second cover electrodes 124, but the present disclosure is not limited thereto. The first cover portion 112" may include one first cover electrode 123 or three or more first cover electrodes 123, and the second cover portion 113" may also include one second cover electrode 124 or three or more second cover electrodes 124.

### (Experimental Examples)

A sample chip of a multilayer electronic component, having a length (L) of 3200 um, a width (W) of 1600 um, and a thickness (T) of 1600 um, was manufactured. Each of widths Wi1 and Wi2 of an internal electrode was 1250 um, and each of lengths Li1 and Li2 of the internal electrode was 2975 µm.

In order to verify an EMI suppression effect of cover electrodes 123 and 124, no cover electrode was formed in Test No. 1, and sample chips were manufactured to have the form illustrated in FIGS. 1 to 4 in Test Nos. 2 to 6. In Test Nos. 2 to 6, when the sample chips were manufactured, widths Wc1 and Wc2 of first and second cover electrodes were changed to satisfy Wc1-Wi1 and Wc2-Wi2 indicated in Table 1 below.

A maximum magnetic field strength was measured using an EMI scanner at a point 1 mm away from an upper surface of the sample chip, and a maximum value of a magnetic field strength in a range of 68 MHz to 140 MHz was the maximum magnetic field strength.

An EMI reduction rate was measured based on a maximum magnetic field strength of Test No.1.

**[Table 1]**

| Test Nos. | Wc1-Wi1 (µm) | Wc2-Wi2 (µm) | Maximum magnetic field strength (A/m) | EMI reduction rate (%) |
|---|---|---|---|---|
| 1 | - | - | 26.7 | 0 |
| 2 | 0 | 0 | 25.3 | 10.2% |
| 3 | 80 | 80 | 25.3 | 10.2% |
| 4 | 160 | 160 | 24 | 19.2% |
| 5 | 240 | 240 | 22.8 | 27.1% |
| 6 | 270 | 270 | 22.6 | 28.4% |

Referring to Test Nos. 2 and 3, it can be seen that, even when a cover electrode is disposed, an EMI reduction rate is low when Wc1-Wi1 and Wc2-Wi2 are 80 um or less.

Conversely, referring to Test Nos. 4 to 6 in which Wc1-Wi1 and Wc2-Wi2 are greater than 80 um, it can be seen that an EMI reduction rate is significantly increased.

In addition, in order to verify an EMI suppression effect according to the number of cover electrodes laminated, the number of cover electrodes laminated was increased when a sample chip was manufactured. When sample chips of Test Nos. 7 to 11 were manufactured, the number of first and second cover electrodes, included in Test No. 6, was increased based on Test No. 6 in Table 1.

**[Table 2]**

| Test Nos. | The number of first cover electrodes | The number of second cover electrodes | Maximum magnetic field strength (A/m) | EMI reduction rate (%) |
|---|---|---|---|---|
| 6 | 1 | 1 | 22.6 | 28.4 |
| 7 | 2 | 2 | 21.5 | 35.2 |
| 8 | 3 | 3 | 19.8 | 45 |
| 9 | 4 | 4 | 19 | 49.4 |
| 10 | 5 | 5 | 18.6 | 51.5 |
| 11 | 6 | 6 | 17.5 | 57 |

Referring to Table 2 above, it can be seen that an EMI reduction rate increases as the number of cover electrodes increases.

In addition, in order to verify a shielding effect caused by adding margin electrodes 125 and 126, a sample chip (Test No. 13) was prepared in which the margin electrodes 125 and 126 are disposed on side surfaces of all first and second internal electrodes, as illustrated in FIGS. 7 and 8. In this case, cover electrodes 123 and 124 of Test No. 13 were formed in the same manner as those of Test No. 11.

In addition, in order to verify a shielding effect when only a margin electrode is disposed without a cover electrode, a sample chip (Test No. 14) was prepared in which a cover electrode is not formed. The sample chip (Test No. 14) was the same as the sample chip of Test No. 13 in terms of a configuration, except for the cover electrode.

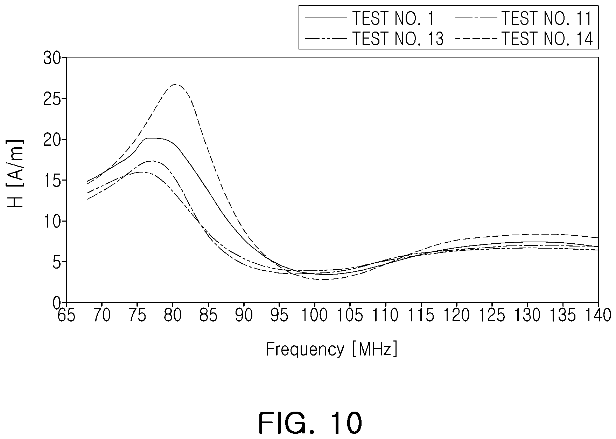

In a case (Test No. 1) in which neither a cover electrode nor a margin electrode is present, a case (Test No. 11) in which only a cover electrode is present, a case (Test No. 13) in which both a cover electrode and a margin electrode are present, and a case (Test No. 14) in which only a margin electrode is present, magnetic field strengths according to frequency change may be measured. The measured magnetic fields are illustrated in FIG. 10.

Referring to FIG. 10, it can be seen that an EMI reduction rate is the highest in a case (Test No. 13) in which both a cover electrode and a margin electrode are present. In a case (Test No. 14) in which only a margin electrode is present, an EMI reduction rate is lower than that in a case (Test No. 11) in which only a cover electrode is present. Accordingly, it can be seen that an EMI suppression effect is further increased by a cover electrode.

While example embodiments have been shown and described above, it will be apparent to those skilled in the art that modifications and variations could be made without departing from the scope of the present disclosure as defined by the appended claims.

In addition, the term "an example embodiment" does not refer to the same example embodiment, and describe different unique features of various example embodiments. However, the above-suggested example embodiments may also be implemented to be combined with a feature of another example embodiment. For example, even when a content described with respect to an example embodiment is not described in another example embodiment, it may be understood as a description related to the other example embodiment unless described to the contrary or contradictory in the other example embodiment.

The terms used herein are merely used to describe a specific example embodiment, and are not intended to limit the present disclosure. Singular forms may include plural forms as well unless the context clearly indicates otherwise.

## Claims

1. A multilayer electronic component comprising:
a body including a capacitance formation portion including first and second internal electrodes disposed alternately in a first direction with a dielectric layer interposed therebetween, the capacitance formation portion having an uppermost end in the first direction on which the first internal electrode is disposed and a lowermost end in the first direction on which the second internal electrode is disposed, a first cover portion disposed on an upper surface of the capacitance formation portion in the first direction, the first cover portion including a first cover electrode, and a second cover portion disposed on a lower surface of the capacitance formation portion in the first direction, the second cover portion including a second cover electrode, the body having first and second surfaces opposing each other in the first direction, third and fourth surfaces connected to the first and second surfaces, the third and fourth surfaces opposing each other in a second direction, and fifth and sixth surfaces connected to the first to fourth surfaces, the fifth and sixth surfaces opposing each other in a third direction;
a first external electrode disposed on the third surface, the first external electrode connected to the first internal electrode and the first cover electrode; and
a second external electrode disposed on the fourth surface, the second external electrode connected to the second internal electrode and the second cover electrode,
wherein, when average sizes of the first internal electrode, the second internal electrode, the first cover electrode, and the second cover electrode in the third direction are Wi1, Wi2, Wc1, and Wc2, respectively, Wc1-Wi1 > 80 um and Wc2-Wi2 > 80 um are satisfied.

2. The multilayer electronic component of claim 1, wherein, in the first direction, an entire portion of the first internal electrode overlaps the first cover electrode, and an entire portion of the second internal electrode overlaps the second cover electrode.

3. The multilayer electronic component of claim 1, wherein, when average sizes of the first internal electrode, the second internal electrode, the first cover electrode, and the second cover electrode in the second direction are Li1, Li2, Lc1, and Lc2, respectively, Li1 ≤ Lc1 and Li2 ≤ Lc2 are satisfied.

4. The multilayer electronic component of claim 1, wherein the first cover portion includes a plurality of first cover electrodes, and the second cover portion includes a plurality of second cover electrodes.

5. The multilayer electronic component of claim 4, wherein the plurality of first cover electrodes in the first cover portion includes two to six first cover electrodes, and the plurality of second cover electrodes in the second cover portion includes two to six second cover electrodes.

6. The multilayer electronic component of claim 1, wherein
the body includes a margin portion disposed on side surfaces of the capacitance formation portion in the third direction, and
the margin portion includes a first margin electrode connected to the first external electrode, and a second margin electrode spaced apart from the first margin electrode, the second margin electrode connected to the second external electrode.

7. The multilayer electronic component of claim 6, wherein the first and second margin electrodes are disposed to be substantially coplanar with the first internal electrode or the second internal electrode.

8. The multilayer electronic component of claim 6, wherein, in the first direction, an entire portion of the first margin electrode overlaps the first cover electrode, and an entire portion of the second margin electrode overlaps the second cover electrode.

9. The multilayer electronic component of claim 6, wherein
the margin portion includes first and second margin portions respectively disposed on one surface and the other surface of the capacitance formation portion in the third direction,
the first margin portion includes a first-first margin electrode connected to the first external electrode, and a second-first margin electrode spaced apart from the first-first margin electrode, the second-first margin electrode connected to the second external electrode, and
the second margin portion includes a first-second margin electrode connected to the first external electrode, and a second-second margin electrode spaced apart from the first-second margin electrode, the second-second margin electrode connected to the second external electrode.

10. The multilayer electronic component of claim 9, wherein an entire size including an average size of the first-first margin electrode in the third direction, the average size of the first internal electrode in the third direction, an average size of the first-second margin electrode in the third direction, an average size of a space between the first-first margin electrode and the first internal electrode in the third direction, and an average size of a space between the first-second margin electrode and the first internal electrode in the third direction is substantially equal to Wc1.

11. The multilayer electronic component of claim 6, wherein
the first and second margin electrodes are disposed to be substantially coplanar with the first internal electrode, and
when the average size of the first internal electrode in the third direction is Wi1, an average size of the first margin electrode in the third direction is Ws1, and an average size of a space between the first margin electrode and the first internal electrode in the third direction is Gs1, 0.01 ≤ Ws1/Wi1 ≤ 0.50 and 1 um ≤ Gs1 are satisfied.

12. The multilayer electronic component of claim 11, wherein, when an average size of the second margin electrode in the third direction is Ws2 and an average size of a space between the second margin electrode and the first internal electrode in the third direction is Gs2, 0.01 ≤ Ws2/Wi1 ≤ 0.50 and 1 um ≤ Gs2 are satisfied.

13. The multilayer electronic component of claim 6, wherein, when an average size of the body in the second direction is Lb, an average size of the first margin electrode in the second direction is Ls1, and an average size of the second margin electrode in the second direction is Ls2, 0.01 ≤ Ls1/Lb ≤ 0.50 and 0.01 ≤ Ls2/Lb ≤ 0.50 are satisfied.

14. The multilayer electronic component of claim 6, wherein, when an average size of a space between the first margin electrode and the second margin electrode in the second direction is Gs3, 1 um ≤ Gs3 is satisfied.

15. The multilayer electronic component of claim 1, wherein, when sizes in the third direction of a region of the first cover electrode in either side not overlapping the first internal electrode are b1 and b2, respectively, b1>0 and b2>0 are satisfied, and b1 and b2 are substantially equal to each other.
